Europäisches Patentamt

European Patent Office

Office européen des brevets

(11) Publication number: **0 261 786**
**A1**

# EUROPEAN PATENT APPLICATION

(21) Application number: **87307245.8**

(22) Date of filing: **17.08.87**

(51) Int. Cl.⁴: **C08F 8/50** , C08F 10/00

(30) Priority: **22.08.86 GB 8620502**

(43) Date of publication of application:
**30.03.88 Bulletin 88/13**

(84) Designated Contracting States:
**BE DE FR GB IT NL SE**

(71) Applicant: **DU PONT CANADA INC.**
**Box 2200 Streetsville Postal Station**
**Mississauga Ontario L5M 2H3(CA)**

(72) Inventor: **Kelly, Peter Yates**
**P.O. Box 866**
**Kingston Ontario, K7L 4X6(CA)**

(74) Representative: **Ellis, John Clifford Holgate et al**
**MEWBURN ELLIS & CO. 2/3 Cursitor Street**
**London EC4A 1BQ(GB)**

(54) **Modification of crystalline propylene polymers.**

(57) A method for the modification of crystalline polymer of propylene is disclosed. A major portion of particles of the propylene polymer is admixed with a minor portion of particles of a composition of a normally solid second polyolefin and an organic peroxide. The second polyolefin, which is a homopolymer of hydrocarbon alpha-olefins having 4 carbon atoms or copolymer thereof with a minor amount of ethylene, has a shear viscosity that is not more than 30% of that of the propylene polymer. The organic peroxide has a half-life at 150°C of from 1-120 minutes. The admixture is mixed at a temperature above the melting point of the propylene polymer and second polyolefin for a period of time that is at least four times the half life of the organic peroxide at the temperature of mixing. The resultant polymers exhibit improved processability while retaining useful physical properties, for example for injection moulding end-uses.

EP 0 261 786 A1

# 0 261 786

## MODIFICATION OF CRYSTALLINE PROPYLENE POLYMERS

The present invention relates to the modification of crystalline propylene polymers and especially to an improved process for decreasing the molecular weight of crystalline propylene polymers to improve the processability of such polymers.

Crystalline propylene polymers are widely used in the fabrication of articles, especially film, fibre and moulded articles. However, for some end-uses the propylene polymers obtained from processes for the manufacture thereof by polymerization of monomer in the presence of a coordination catalyst may be too high in molecular weight, and thus exhibit processing difficulties in the fabrication of articles.

Processes for decreasing the molecular weight of crystalline propylene polymers are known. For example, U.S. Patent 3 887 534 of Kazuo Baba et al., issued 1975 June 03, describes a method for the modification of crystalline propylene polymers in which a mixture of polymer and aliphatic peroxide is heated to a temperature of 170-280°C. The peroxide must have a half-life time of 2-10 hours at 130°C and a vapour pressure of not more than 760 mm Hg at 230°C. That patent also makes reference to prior processes in which an aqueous slurry of propylene polymer is heated in the presence of oxygen and an organic free radical catalyst, or in which mixtures of propylene polymer and peroxide are heated in a solvent at a temperature of from 60-250°C in the presence of an inert gas which may contain oxygen, or in which mixtures of propylene polymer and peroxide are heated in the absence of oxygen.

Kazuo Baba et al. stated that in order to obtain uniform decomposition of polymer by the use of a peroxide, so as to decrease the molecular weight of the polymer, it is preferred to heat the polymer and peroxide in the absence of a medium e.g. in a pelletizer. Selection of an appropriate peroxide was stated to be not easy. It is necessary that the peroxide react at an adequate rate with the propylene polymer at the melt extrusion temperatures of the polymer. If the peroxide reacts instantaneously e.g. at the entrance to the melt extrusion apparatus, uniform decomposition of the polymer is not assured. In contrast, if the peroxide reacts too slowly, the resultant modified polymer would contain unreacted peroxide.

Processes for the manufacture of articles from admixtures of polyolefins and organic peroxides are disclosed in published European patent applications 0 172 650 of G. White, and 0 210 306 of D.W. Boivin and R.A. Zelonka, published 1986 February 26 and 1987 February 04, respectively.

A method has now been found that is capable of being used for the modification of crystalline propylene polymer in a more effective manner.

Accordingly, the present invention provides a method for the modification of crystalline propylene polymer which comprises:

(a) admixing a major portion of particles of said propylene polymer with a minor portion of particles of a composition of a normally solid second polyolefin and organic peroxide, said second polyolefin being selected from the group consisting of homopolymers of a hydrocarbon alpha-olefin having 4 carbon atoms and copolymers of such alpha-olefin with minor amounts of ethylene, said second polyolefin having a shear viscosity that is not more than 30% of that of said propylene polymer when measured at 200°C and at a shear rate of 400 $sec^{-1}$, said organic peroxide having a half-life at 150°C of from about one minute to about 120 minutes;

(b) mixing the admixture of (a) at a temperature above the melting point of both the crystalline propylene polymer and the second polyolefin for a period of time that is at least four times the half-life of the organic peroxide at the said temperature of mixing, and

(c) cooling the resultant modified propylene polymer.

In a preferred embodiment of the method of the present invention, the second polyolefin is an elastomer.

The present invention relates to the modification of crystalline propylene polymers. Such polymers include homopolymers of propylene and copolymers of propylene with minor amounts of ethylene, examples of which are available commercially. The crystalline propylene polymers will usually be of a high molecular weight, such that reduction of the molecular weight of the polymer will yield a polymer of improved processability and which has commercially-acceptable properties.

The second polyolefin may be a homopolymer of a hydrocarbon alpha-olefin having 4 carbon atoms. Such polymers include polybutene-1 and polyisobutylene. The second polyolefin may also be a copolymer of such hydrocarbon alpha-olefin with a minor amount of ethylene.

2

It is important that the second polyolefin be compatible with the crystalline propylene polymer, both during the process for modification of the propylene polymer and in the resultant product. Such compatibility facilitates admixing of the crystalline propylene polymer and the second polyolefin, and hence of the cyrstalline propylene polymer and the organic peroxide. Compatibility of the modified propylene polymer and the second polyolefin results in a product of more uniform properties.

The second polyolefin has a shear viscosity that is not more than 30% of that of the crystalline propylene polymer prior to modification, preferably 15-25% of that of the crystalline propylene polymer. As used herein, shear viscosity is determined at 200°C at a shear rate of 400 sec$^{-1}$.

The preferred second polyolefin is polybutene, especially a polybutene having a melt index of at least 10 dg/min.

The organic peroxide, which as used herein includes hydroperoxides, has a half-life at 150°C of from about one minute to about 120 minutes. Examples of such organic peroxides include bis(tert. alkyl peroxy alkyl) benzene, dicumyl peroxide, acetylenic diperoxy compounds, t-butyl hydroperoxide and di-t-butyl peroxide. 2,5-Dimethyl-2,5-bis(tert. butyl peroxyisopropyl) benzene is a preferred organic peroxide and is available commercially under the trade mark Vulcup from Hercules Incorporated. Other preferred organic peroxides are 2,5-dimethyl-2,5-di(t-butylperoxy) hexane and 2,5-dimethyl-2,5-di(t-butylperoxy) hexyne-3 which are available commercially under the trade marks Lupersol 101 and 130, respectively, from Lucidol Division of Pennwalt Corporation.

A co-curing agent may be incorporated into the second polyolefin, either separately from or admixed with the organic peroxide. Examples of co-curing agents include triallyl cyanurate, triallyl isocyanurate and 1,2-polybutadiene.

In the method of the present invention, a major portion of particles of the crystalline propylene polymer are admixed with a minor portion of the composition of second polyolefin and organic peroxide. Preferably a physical admixture of such major and minor portions is formed. While the concentration of organic peroxide and second polyolefin may be varied over a wide range, it is preferred that the second polyolefin contain less than 4% by weight of organic peroxide, preferably 0.05-2.0% and especially 1-2% by weight of organic peroxide.

The ratio of the crystalline propylene polymer to second polyolefin may also be varied over a wide range, particularly from about 5:1 to about 400:1, and especially about 50:1 to about 100:1. The ratio selected will depend on a variety of factors, including the amount of organic peroxide to be incorporated into the admixture, the need for a uniform product, the type of processing that the admixture is to be subjected to and the mixing capabilities of apparatus used in carrying out the method of the present invention.

The particles of the crystalline propylene polymer and the second polyolefin may be of any convenient shape and size and may for example be granules, powder, pellets or the like. Such forms are commercially available forms of polymers and/or may be obtained by known techniques e.g. grinding, melt pelletization and the like. However, it is preferred that the particles of the crystalline propylene polymer be of substantially the same size as the particles of the composition of the second polyolefin. As the difference in size between the particles increases, so does the possibility that the two types of particles will become separated from one another during storage, transportation or other handling of the blend; such differences may be less critical if the blend is fed to an extruder shortly after preparation thereof.

The amount of organic peroxide in the admixture may be varied over a wide range, especially over the range of 0.001-0.8% by weight. It is a particular feature of the method of the present invention, as is illustrated hereinafter, that very low levels of organic peroxide in the admixture may be used to modify the propylene poymer while obtaining a degree of modification that is believed to require a significantly higher level of organic peroxide in prior art processes.

The composition of the second polyolefin may be produced by techniques known in the art for incorporating organic peroxides into polyolefins. Such methods include melt blending, coating and extrusion, and injection of the agent into molten polymer. The cross-linking agent should be incorporated into the polyolefin in a manner that does not result in premature reaction with the polyolefin, as is known in the art.

The admixture is subjected to and admixed at a temperature above the melting point of both the crystalline propylene polymer and the second polyolefin, especially at temperatures in the range of 200-300°C and preferably at temperatures used in the melt processing of crystalline propylene polymers. The admixture should be subjected to such temperatures for a period of at least four times the half-life of the organic peroxide at the temperature of the admixture. Preferbly the admixture is fed to an extruder equipped with a suitable mixing screw and processed at temperatures and a hold-up time that results in the desired amount of modification of the propylene polymer.

The modified propylene polymer may be formed directly into an article or may be formed into some other shape e.g. pellets, and subsequently formed into an article.

The method of the present invention may be used for modification of crystalline propylene polymers to produce compositions suitable for a wide variety of uses e.g. in injection moulding, extrusion and coating proceses.

The present invention is further illustrated by the following examples.

Example 1

2500 ppm of Lupersol 130 organic peroxide was incorporated into a polybutene having a melt index of 20 dg/min and a shear viscosity of 1050 poise, available from Shell Chemical Company as PB-0400. The resultant composition was admixed with a film-grade propylene polymer viz. polypropylene available from Himont Inc. as PD 888, which was a shear viscosity of 4800 poise, and then injection moulded using and Engel™ injection moulding machine. The melt temperature was about 290°C and the hold-up time in the injection moulding machine was about five minutes, in excess of four times the half life of the organic peroxide at the melt temperature.

Further experimental details and the results obtained are as follows:

| Run No.** | 1 | 2 | 3 | 4 |
|---|---|---|---|---|
| Amount of PB-0400 (wt %) | 0 | 4 | 4 | 9 |
| Organic Peroxide (ppm) | 0 | 0 | 100 | 225 |
| Melt Index dg/min. | 0.6 | 0.8 | 2.7 | 6.3 |
| Snake Flow (cm) | 3.6 | – | 4.4 | 6.2 |
| Tensile Impact Strength (Joules/cm) 23°C | 50 | 100 | 51 | 59 |
| Tensile Impact Strength (Joules/cm) 0°C | 14 | 10 | 10 | 5.8 |
| Flexural Modulus (MPa) | 1000 | 930 | 930 | 860 |

** Runs 1 and 2 are comparative runs and Runs 3 and 4 are of the invention

Melt Index is measured by the procedure of ASTM D-1238 (Condition E)

Snake Flow is determined using an S-shaped mould of substantially rectangular cross-section, having a channel depth of 0.1 cm and a channel width of 1,25 cm. The mould has a surface finish of ASA 16 on the fixed side and ASA 4 on the polished cavity. The length of the flow path is measured from the gate of the mould. Steps should be taken to obtain optimal uniformity in the determination of snake flow, especially of temperature of the polymer. The snake flow specimens were moulded using the mould described above and an Engel injection moulding machine at a melt (nozzle) temperature of 220°C using the following cycle: inject and hold (6 seconds), cool (16 seconds(, open (1 second) and eject and close (1 second). Snake flow is reported as an average of ten measurements.

Tensile Impact Strength is measured by the procedure of ASTM D-1822

Flexural Modulus is measured by the procedure of ASTM D-747.

It is estimated, from the above results, that about 250 ppm of Lupersol 130 organic peroxide is required to produce a ten-fold increase in melt index.

Example II

The procedure of Example I was repeated using either PD-0400 polybutene or Shell high flow homopolymer polypropylene TM 6300, each containing 7000 ppm Lupersol 130 organic peroxide, as the second polyolefin. The homopolymer has a shear viscosity of 1200 poise.

Further details and the results obtained are as follows:

| Run No.* | 5 | 6 | 7 | 8 | 9 |
|---|---|---|---|---|---|
| Amount of PB-0400 or TM 6300 (%) | 0 | 2 | 4 | 2 | 4 |
| Organic Peroxide (ppm) | 0 | 140 | 280 | 140 | 280 |
| Melt Index (dg/min) | 0.44 | 3.8 | 8.3 | 1.9 | 4.4 |
| Snake Flow (cm) | 3.8 | 4.8 | 5.5 | 4.3 | 4.9 |

* Run 5 is a comparative run.

In Runs 6 and 7, PB-0400 was used
In Runs 8 and 9, TM 6300 was used

The results show that the coated polybutene resin was more effective than the coated polypropylene resin.

In order to obtain a melt index increase of ten-fold, the results of Example II show that the the use of polybutene as the second polyolefin required about 175 ppm of organic peroxide whereas the use of polypropylene as the second polyolefin required about 280 ppm of organic peroxide. In contrast, in Examples 1 and 2 of U.S. 3 887 534, in which peroxide supported on clay was dry blended with polypropylene, about 850 ppm of Lupersol 101 organic peroxide was required in Example 1 and more than 5000 ppm of Lupersol 130 organic peroxide was required in Example 2 to achieve the same result. Moreover, in Examples 1 and 2 of U.S. 3 144 436, in which t-butyl hydroperoxide was injected as a solution in benzene directly into molten polypropylene, the amount of peroxide required to achieve the same increase in melt index was about 400 ppm and 320 ppm, respectively.

Example III

Peroxide concentrates were prepared by incorporating Lupersol 130 organic peroxide into PB 0400 polybutene and into TM 6300 high flow polypropylene. The resultant concentrates were then blended with PD 888 polypropylene obtained from Himont Inc. and the resultant blends were injection moulded into one litre rectangular containers using a melt temperature of 260°C. The minimum injection pressure required to fill the mould and obtain containers of acceptable quality was noted.

After a period of 48 hours at ambient temperature to condition the containers, the containers were completely filled with water at 23°C and dropped so as to land on the base of the container. The maximum height, called the safe drop height, at which the containers could be dropped without breakage of the container was noted.

Further details and the results obtained were as follows:

5

| Run No.* | 10 | 11 | 12 | 13 | 14 |
|---|---|---|---|---|---|
| Amount of Peroxide Concentrate (wt %) | 0 | 1 | 1.5 | 2 | 1.5 |
| Organic Peroxide ppm | 0 | 150 | 225 | 200 | 225 |
| Melt Index (dg/min) | 0.4 | - | 3.4 | - | 2.5 |
| Injection Pressure (MPa) | 69 | 41 | 34 | 34 | 34 |
| Safe Drop Height (cm) | 91 | 91 | 76 | 76 | 76 |
| Tensile Impact Strength, 23°C (Joules/cm) | - | 106 | 57 | 71 | 52 |

\* Run 10 is a comparative run and Runs 11-13 are of the invention; Runs 11, 12 and 13 used PB 0400, Run 14 used TM 6300

The results show that the minimum pressure required to injection mould the container could be reduced significantly by the addition of the peroxide concentrate. Run 11 shows that the safe drop height was not reduced, compared to Run 10, in this example, while a reduction of less than 20% was obtained in Runs 12-14. A comparison of Runs 12 and 14 shows that polybutene was more effective than high flow polypropylene in increasing melt index while providing similar safe drop height and tensile impact strength.

**Claims**

1. A method for the modification of crystalline propylene polymer which comprises:

(a) admixing a major portion of particles of said propylene polymer with a minor portion of particles of a composition of a normally solid second polyolefin and organic peroxide, said second polyolefin being selected from the group consisting of homopolymers of a hydrocarbon alpha-olefin having 4 carbon atoms and copolymers of such alpha-olefin with minor amounts of ethylene, said second polyolefin having a shear viscosity that is not more than 30% of that of said propylene polymer when measured at 200°C and at a shear rate of 400 sec$^{-1}$, said organic peroxide having a half-life at 150°C of from about one minute to about 120 minutes:

(b) mixing the admixture of (a) at a temperature above both the melting point of the crystalline propylene polymer and the second polyolefin for a period of time that is at least four times the half-life of the organic peroxide at the said temperature of mixing, and

(c) cooling the resultant modified propylene polymer.

2. The method of Claim 1 in which the second polyolefin is an elastomer.

3. The method of Claim 1 or Claim 2 in which the ratio of propylene polymer to second polymer in the admixture is in the range of 5:1 to 400:1.

4. The method of any one of Claims 1-3 in which the ratio of propylene polymer to second polymer in the admixture is in the range of 50:1 to 100:1.

5. The method of any one of Claims 1-4 in which the shear viscosity of the second polymer is 15-25% of that of the propylene polymer.

6. The method of any one of Claims 1-5 in which the amount of organic peroxide in the admixture is 0.001-0.8% by weight.

6

7. The method of any one of Claims 1-6 in which the organic peroxide is selected from the group consisting of bis(tert. alkyl peroxy alkyl) benzene, dicumyl peroxide, acetylenic diperoxy compounds, t-butyl hydroperoxide and di-t-butyl peroxide.

8. The method of any one of Claims 1-6 in which the organic peroxide is selected from the group consisting of 2,5-dimethyl-2,5-bis(tert. butyl peroxyisopropyl) benzene, 2,5-dimethyl-2,5-di(tert. butylperoxy) hexane and 2,5-dimethyl-2,5-di(tert. butylperoxy) hexyne-3.

9. The method of any one of Claims 1-8 in which the second polyolefin has a melt index of at least 10 dg/min.

10. The method of any one of Claims 1-9 in which the second polyolefin contains less than 4% by weight of organic peroxide.

11. The method of Claim 10 in which the second polyolefin contains 0.05-2% by weight of organic peroxide.

12. The method of any one of Claims 1-11 in which the second polyolefin is polybutene.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 375 531 (J.F. ROSS)<br>* Claims 1-10 *<br>--- | 1 | C 08 F 8/50<br>C 08 F 10/00 |
| A | US-A-3 407 163 (M.A. McCALL)<br>* Claims 1-13 *<br>--- | 1 | |
| A | US-A-3 388 067 (H. TAKASHIMA)<br>* Claims 1-4 *<br>----- | 1 | |

TECHNICAL FIELDS
SEARCHED (Int. Cl.4)

C 08 F

The present search report has been drawn up for all claims

| Place of search | Date of completion of the search | Examiner |
|---|---|---|
| THE HAGUE | 22-12-1987 | PERMENTIER W.A. |